Europäisches Patentamt

European Patent Office

Office européen des brevets

(19)

(11) Veröffentlichungsnummer: 0 339 182
A2

(12) **EUROPÄISCHE PATENTANMELDUNG**

(21) Anmeldenummer: 89100919.3

(22) Anmeldetag: 20.01.89

(51) Int. Cl.⁴: **B29C 63/06 , //B65B9/02**

(30) Priorität: 16.04.88 DE 3812822

(43) Veröffentlichungstag der Anmeldung:
02.11.89 Patentblatt 89/44

(84) Benannte Vertragsstaaten:
AT BE ES FR GB IT NL SE

(71) Anmelder: M B S FRIEDHELM SCHAEFER
Heinrich-Hertz-Strasse 1
D-4834 Harsewinkel(DE)

(72) Erfinder: Makuc, Helmut
Sperberweg 2
D-4834 Harsewinkel(DE)

(74) Vertreter: Meldau, Gustav, Dipl.-Ing. et al
Patentanwälte Dipl.-Ing. Gustav Meldau
Dipl.-Phys. Dr. H.-J. Strauss Postfach 2452
Vennstrasse 9
D-4830 Gütersloh 1(DE)

(54) **Verfahren und Vorrichtung zum Ummanteln länglicher Körper mit einem aus einer Schweissbahn gebildeten Mantel.**

(57) Zum Ummanteln länglicher Körper (9), wie z.B. Kabelbäume mit einem aus einer Schweißbahn (11) aus verschweißbarer Kunststoff-, Polster- oder Schaumstoff-Folie gebildeten Mantel (9.1), unabhängig von Querschnittsform und Durchmesser, werden ein Verfahren und eine Vorrichtung vorgeschlagen, mit der der längliche Körper (9) aus einer Position vor der vorhangähnlich gespannten Schweißbahn (11) quer zur Schweißbahnebene durch diese bewegt wird, wobei der längliche Körper (9) diese unter Bildung einer haarnadelähnlichen Umschlingung mitnimmt und wobei die Bewegung angehalten wird, nachdem der längliche Körper (9) eine im wesentlichen parallel zur Schweißbahnebene liegende, von zwei einander gegenüber geordnete Schweißschienen gebildete Schweißschienenebene (51.1, 51.2) passiert hat, mit der drauf die haarnadelförmige Umschlingung nach dem Anhalten der Bewegung durch Schließen der Schweißschienen (51.1, 51.2) zu einer Vollumschlingung umgeformt wird, diese durch Erhitzen verschweißt und die Schweißnaht etwa mittig getrennt wird, und mit der schließlich der mit Mantel (9.1) versehene längliche Körper (9) entnommen wird und die Schweißbahn (11) in die Schweißbahnebene zurückkehrt.

Fig.2

## Verfahren und Vorrichtung zum Ummanteln länglicher Körper mit einem aus einer Schweißbahn gebildeten Mantel

Die Erfindung betrifft ein Verfahren zum Ummanteln länglicher Körper, wie beispielsweise Kabelbäume mit einem aus einer Schweißbahn aus verschweißbarer Kunststoffolie, Polsterfolie mit Luftblasen, Schaumstoffolie o.dgl. gebildeten Mantel, mit mindestens einer längs verlaufenden, sich über die Mantellänge erstreckenden Naht; sie betrifft weiter eine Vorrichtung zum Herstellen ummantelter länglicher Körper nach diesem Verfahren.

Längliche Körper bedürfen aus verschiedenen Gründen einer Umhüllung. Diese kann ein Schutz gegenüber mechanischer Beschädigung sein, sie kann einen Schutz gegen unerwünschte chemische Einwirkungen bilden oder schließlich - wenn der längliche Körper aus mehreren zusammengesetzt ist, wie beispielsweise ein Kabelbaum, diesen zusammenhalten. Im einfachsten Fall wird der längliche Körper mit einem streifenförmigen Material spiralig umwickelt, das dann in üblicher Weise durch Binden oder Kleben befestigt wird. Bei aus einer Anzahl von Drähten zusammengesetzten Kabelbäumen kennt man auch das Umbinden mit im Abstand voneinander angeordneten Schlingen,um die einzelnen Drähte zu fixieren. In beiden Fällen wird die volle Aufgabe eines Schutzes gegen mechanische Beschädigung, event. chemische Einwirkungen und - soweit nötig - das Zusammenhalten nur unvollkommen erfüllt. Darüber hinaus ist dieses Verfahren zeitaufwendig und unwirtschaftlich. Das Ummanteln länglicher Körper durch Überschieben eines schlauchförmigen Mantels ist ebenfalls bekannt, wobei allerdings der längliche Körper mindestens auf einer Seite in seinem Querschnitt bis an das offene Ende erhalten sein muß. Letzteres ist insbesondere bei Kabelbäumen nur selten der Fall, so daß dort das Überschieben eines Schlauches entfällt. Es ist auch bekannt, insbesondere zu Isolierzwecken Schaumstoff-Rohre die längs einer Mantellinie aufgeschnitten sind über längliche Körper zu bringen und dann die aufgeschnittene Mantellinie zu verschließen. Zwar läßt sich das rohrförmige Mantelmaterial bereits von einer Rolle abziehen, so daß das Ummanteln wirtschaftlicher gestaltet werden kann, jedoch ist eine Anpassung an verschiedene Durchmesser der länglichen Körper nur mit Wechsel des rohrförmigen Mantel-Materials möglich. Darüber hinaus ist auch eine wirtschaftliche Gestaltung des Ummantelvorganges im Sinne einer Fertigungs-Automatisierung nicht gegeben.

Hier setzt die Erfindung ein, der die Aufgabe zugrunde liegt ein Verfahren zur Ummantelung von länglichen Körpern, wie beispielsweise Kabelbäume vorzuschlagen, daß das Ummanteln unabhängig von Querschnittsform und Durchmesser gestattet und das sich wirtschaftlich einfach und sicher durchführen läßt; darüber hinaus wird von der Erfindung eine Vorrichtung vorgeschlagen, mit deren Hilfe das Verfahren zum Ummanteln durchführbar ist und die einfach und sicher arbeitend mit einfachen Mitteln aufbaubar, bedienbar und wartbar ist.

Diese Aufgabenstellung wird durch die kennzeichnenden Teile des Verfahrensanspruchs sowie des Vorrichtungsanspruchs gelöst; Weiterbildungen des Verfahrens sowie Weiterbildungen und bevorzugte Ausführungsformen der Vorrichtung beschreiben die Unteransprüche.

Dadurch, daß der zu ummantelnde Körper durch die Schweißbahnebene und die Ebene der Schweißschienen hindurchbewegt wird schafft er sich durch das Mitnehmen der Schweißbahn seinen eigenen Mantel, der durch das Schließen der Schweißschienen zum umhüllenden Mantel geformt und durch einen Wärmeimpuls abgeschweißt wird. Wie eng der Mantel am länglichen Körper anliegt hängt dabei vom Zug ab, den der Körper auf die Schweißbahn ausübt und von dem Abstand den der Körper in der Abschweißposition von den Schweißschienen hat. Je größer der Zug ist, je näher an den Schweißschienen die Bewegung des Körpers angehalten wird, um so dichter umschließt der Mantel den länglichen Körper. Dabei ist zunächst die Form des länglichen Körpers ohne Bedeutung, wesentlich ist nur, daß er einschl. des von ihm mitgenommenen Schweißbahn-Materials durch den Spalt zwischen den beiden Schweißschienen geführt werden kann, wobei die seitlichen Enden außerhalb der Schweißschienen (und damit auch außerhalb der Schweißbahn) eine beliebige Form aufweisen können. Nach dem Abschweißen kann der fertig ummantelte Körper abgenommen werden, während die Schweißbahn selbst - etwa unter ihrem natürlichen Zug-in ihre Ausgangslage zurückkehrt.

Dieser Zug kann durch ein Nachspannen in Zuführrichtung ausgeübt werden, dies ist dann vorteilhaft, wenn die Zuführung der Schweißbahn von einer Seite her erfolgt. Vor Beginn des Ummantelns wird das freie Ende der Schweißbahn an der Vorrichtung, vorteilhaft an einem Spannbalken befestigt. Nach der ersten Umschweißung bildet sich in der Höhe der Schweißschienen eine Schweißnaht, die die zuzuführende Schweißbahn mit einem Stück der Schweißbahn verbindet. In diesem Bereich wird der nächste längliche Körper durch die Schweißbahn-Ebene geführt und zieht bei seiner Bewegung Schweißbahn mit, wobei dieses "Mitziehen" neben dem Strecken der Schweißbahn sich auch über diese bis zum Schweißbahnvorrat fortsetzt. Bei symmetrischer, zweiseitiger Zuführung der Schweißbahn entfällt dieses zusätzliche Spannen, hier ist die Schweißnaht immer symmetrisch zu den Schweißschienen ausgerichtet und wird beim Mitnehmen auf der Vorderseite des länglichen Körpers mitgenommen. Die neue Schweißnaht befindet sich dann immer auf der Rückseite, ein Überschweißen wie bei einseitiger Bahnzuführung muß nicht durch zusätzliche Vorschubeinrichtungen verhindert werden. Ist der längliche Körper insich flexibel, ist es vorteilhaft den länglichen Körper vor dem Ummanteln auszurichten und zu strammen. Dieser folgt durch das Anlegen einer in Längsrichtung des länglichen Körpers wirkenden Kraft durch eine spezielle Strammereinheit.

Um dieses Verfahren in der Praxis durchführen zu können wird in einem Grundgestell eine Vorratsrolle für die einseitige bzw. zwei Vorratsrollen für die doppelseitige Zuführung des Schweißbahn-Materials vorgesehen. Von dieser/diesen Vorratsrolle/-en wird Schweißbahnmaterial durch eine Antriebswalze abgezogen und in eine Ausgleichsschlaufe gelegt, die zwischen der angetriebenen Walze und er folgenden Umlenkwalze liegt. Diese Ausgleichswalze fängt die diskontinuierliche Bewegung der Schweißbahn infolge der Vorwärtsbewegung des zu ummantelnden länglichen Körpers ab, sie dient über diese Ausgleichsfunktion hinaus auch als Indikator für den verfügbaren Vorrat an Schweißbahnmaterial und kann-wenn eine entsprechende Sensoreinrichtung vorgesehen ist-bei einem Ausfall des Vorschubs die Gesamt-Vorrichtung über eine Not-Aus-Schaltung stillegen und Alarm geben.

Das Durchführen des länglichen Körpers durch Schweißbahn-und Schweißschienen-Ebene kann diskontinuierlich mittels eines Schwenkhebel-Paares oder kontinuierlich mit einem Umlaufförderer erfolgen. Dabei versteht sich von selbst, daß hier unter "kontinuierlich" eine Taktförderung gemeint ist, da das Förderband zumindest im Bereich der Abschweißposition für die Zeit des Abschweißens zur Ruhe kommen muß.

Die Schwenkhebeleinrichtung ist um eine Schwenkachse schwenkbar, wobei an den freien Enden der Schwenkhebel den länglichen Körper aufnehmende Klemmgabeln vorgesehen sind. Ist der längliche Körper eingelegt und geklemmt, wird die Schwenkhebeleinrichtung durch die Schweißbahn-Ebene hindurchgeschwenkt. In einfacher Weise geschieht dies von Hand, wobei - aus Gründen der Arbeitssicherheit - jeder der Schwenkhebel mit einem eigenen Handgriff versehen ist und zum Verschwenken beide Handgriffe gefaßt sein müssen. Ein automatisches Verschwenken durch Drehen der Schwenkachse, mit der die Schwenkhebel form- oder reibschlüssig verbunden sind, oder durch an einem die Schwenkhebel verbindenden Quergestänge angreifenden Antrieb stellt eine vorteilhafte Weiterbildung da. Im hinteren Totpunkt kommt die Bewegung zum Stillstand, die Schweißschienen schließen und die Ummantelung wird - wie beschrieben - beendet. Nach der Rückbewegung öffnen die Klemmgabeln, der ummantelte Körper kann entnommen werden und die Einrichtung ist bereit für den nächsten Arbeitsgang. Die Schwenkhebel können selbstverständlich auch mit einem besonderen Antriebsgestänge zusammenwirken, das seinerseits mit einem einseitigen oder einem doppelseitigen Antrieb in Wirkverbindung steht. Die Lage des hinteren Totpunktes wird durch einen Anschlag gegeben, der-besonders bei automatischem Antrieb - auch mit einem Endschalter versehen sein kann. Die Lage des hinteren Totpunktes bestimmt die Größe der Schlaufe der Schweißbahn, die zum Ummanteln gebraucht wird. Es versteht sich von selbst, daß der hintere Endschalter auch als Auslösschalter für den Schweißvorgang benutzt werden kann. Der vordere Anschlag gibt die Einlegeposition; darüber hinaus kann ein Endschalter am vorderen Anschlag die Maschinensteuerung so unterbrechen, daß der Schweißvorgang nicht auslösbar ist. Zum Strammen des länglichen Körpers wird entweder der eine der Schwenkhebel unter Krafteinsatz nach außen gelegt, oder es wird das freie Ende eines der Klemmhelbe mit der Klemmgabel nach außen geschwenkt. In beiden Fällen erfährt der zwischen den Klemmgabeln eingespannte längliche Körper eine strammende und ausrichtende Kraft. Bei der Förderung des länglichen Körpers mit einem Umlaufförderer laufen zwei Umlaufketten, Umlaufbänder o.dgl. im Abstand voneinander um, wobei sie über ein vorderes und ein hinteres Umlenkrad geführt sind, die vorteilhafterweise auf einer vorderen und auf einer hinteren Welle gelagert sind. Eine einfache Synchronisierung wird dadurch erreicht, daß eine dieser Wellen Antriebswelle ist. Beide Bänder sind in regelmäßigen Abständen angeordneten Klemmgablen bestückt, wobei die Klemmgabeln paarweise zueinander fluchten. Im Bereich der vorderen Umlenkrolle befindet sich eine Öffnereinrichtung, die den bewegten Teil der Klemmgabel, zum Beispiel durch eine Auflaufbahn abhebt und so die von einer Zugfeder geschlossen gehaltene Klemmgabel öffnet. Dies erlaubt das Einlegen des länglichen Körpers. Nach dem Ablauf von dieser Öffnervorrichtung schließt die Gabel zwangsläufig, der längliche Körper ist geklemmt und wird geklemmt durch die Schweißbahn-und Schweißschienen-Ebene geführt. Nach dem Abschweißen wird er in Förderrichtung bis zu den hinteren Umlenkrollen weitergeführt, dort ist eine ähnliche Öffnereinrichtung die das Abwerfen des nun ummantelten Körpers in eine Auffanggefäß erlaubt.

Zum Strammen ist eine besondere Strammerstation vorgesehen, die in Bezug auf die Schweißstelle genau in dem Abstand liegt, daß die Klemmgabel beim Anhalten zum Schweißtakt in der Strammerposition fluchtend zum Stehen kommen. In dieser Strammerposition befindet sich ein Strammer-Greifer mit Greiferarmen, deren Schwenkachse rechtwinklig zur Förderrichtung des Umlaufförderers stehen, so daß die Greiferarme mit ihren Halteplatten das eine der freien Enden des länglichen Körpers erfassen und klemmend halten können. Es versteht sich von selbst, daß diese Greiferarme so weit zur Seite geklappt werden müssen, daß der freie Durchgang der im Umlaufförderer befindlichen länglichen Körper nicht behindert wird; dabei reicht ein Klappen um 90° aus. Die Strammerarme werden mit Hilfe eines Strammerzylinders und einem Hebelgetriebe, das vorzugsweise als Winkelhebelgetriebe im Sinne eines Über-Totpunktverschlusses ausgebildet ist, bewegt. Alternativ können auch beide Strammerarme mit je einem Strammerzylinder ausgestattet sein, wobei die Strammerzylinder dann hydraulisch oder pneumatisch parallel geschaltet sind. Mit Hilfe dieses Antriebs wird eine auf den länglichen Körper einwirkende Strammer-Kraft erzeugt, die den länglichen Körper ausrichtet und strammt. Dabei ist eine Verriegelung derart vorgesehen, daß nach dem Schließen des Strammergreifers die in Strammerposition befindliche Klemmgabel durch eine besondere, mit einem eigenen Antrieb, z.B. einem Hydraulikzylinder, versehene Löseeinrichtung geöffnet und danach der Strammerzylinder betätigt wird, der über die Hebelanordnung das durch den Strammergreifer gefaßte Ende des länglichen Körpers nach außen zieht. Diese, für ein ordnungsgemäßes Strammen notwendige Synchronisierung wird im einfachsten Fall durch eine zeitgesteuerte Logikschaltung realisiert, besonders wenn die Antriebe des Strammers, den Strammerarm und das Öffnen für die Klemmgabel als hydraulische oder pneumatische Zylinder ausgebildet sind. Nach dem Strammen und Ausrichten wird zunächst der die Klemmgabel ösende Öffnerzylinder entspannt, so daß die Zugfeder der Klemmgabel diese schließen kann und danach wird der Strammerzylinder gelöst und die Greiferarme des Strammergreifers nach außen geklappt, so daß der nunmehr aufgerichtete längliche Körper frei in die Schweißposition transportiert werden kann. Bei der Schwenkhebelausführung wird im vorderen Totpunkt gestrammt, im übrigen verläuft das Strammen wie vorbeschrieben.

Wird die Schweißbahn einseitig der Schweißstelle zugeführt, ist es vorteilhaft das freie Ende der Schweißbahn mit einer Spannwalze zu fassen, die bei jedem Schweißtakt geringfügig weiterbewegt wird. Dies kann vorteilhaft durch einen Klinkenstangen-Klinkenrad-Antrieb geschehen, der mit der Schwenkbewegung der Schwenkhebelanordnung gekoppelt ist, es können selbstverständlich auch andere Bewegungsauslösungen vorgesehen sein, so z.B. ein eigener Hydraulikzylinder, der beim Vorschub des länglichen Körpers in die Schweißposition aktiviert wird. Dabei ist es ohne Bedeutung, ob dieser Vorschub durch Einschwenken des länglichen Körpers mit der Schwenkhebelanordnung oder durch Einbringen des länglichen Körpers mit dem Umlaufförderer in die Schweißposition erfolgt.

Vorteilhaft ist eine Weiterbildung, bei der die Vorrichtung an unterschiedliche Umschweißungs-Breiten anpaßbar ist. Dies geschieht dadurch, daß mindestens einer der Schwenkhebel bzw. mindestens einer der Umlaufförderer seitliche verschiebbar ist. Bei der Schwenkhebelanordnung ist dazu der Schwenkhebel auf der die Schwenkachse bildenden Welle und ggf. auf dem Antriebsgestänge seitlich verschieblich gelagert und kann in der gewünschten Position mit Hilfe von Feststelllagern festgeklemmt werden. Vorteilhaft ist es, wenn bei einseitiger Verstellung der Schwenkhebel seitlich verlagerbar ist, der nicht mit der Strammereinrichtung versehen ist. Gleiches gilt entsprechend für den Umlaufförderer. Hier sind die die Umlaufräder tragenden Achsen als durchgehende, im Grundgestell abgestützte Wellen ausgebildet, auf denen das vordere bzw. das hintere Umlenkrad des zu verschiebenden Förderers quer zur Förderrichtung bewegbar sind. Die Schweißschienen müssen dabei für jede Schweißlänge angepaßt werden, was durch Umrüstung an den Schweißschienenträgern erfolgt. Im Hinblick auf die Symmetrie der Schweißschienenträgerausbildung ist es auch möglich beide Schwenkhebel bzw. beide Umlaufförderer in der entsprechenden vorbeschriebenen Weise seitlich verschiebbar zu machen, so gelingt es die mittige Lage der Schweißschienen und die mittige Lage der Schweißbahn bei unterschiedlichen Schweißbreiten zu erhalten.

Die Schweißschienen selbst sind an Schweißschienenhaltern befestigt, wobei mindestens einer der Schweißschienenhalter gegen den anderen bewegbar ist. Diese Bewegung ist im Hinblick auf die zu erzielende Schweißnaht parallel geführt, wobei Führungsstangen in entsprechenden Führungsbuchsen gelagert diese Parallelführung bewirken. Der Antrieb selbst vorteilhaft als Hydraulik- oder Pneumatikzylinder ausgebildet, der das Absenken und Anheben des bewegbaren Schweißschienenhalters bewirkt und daher vorteilhaft doppelt wirkend ausgeführt ist.

Es versteht sich von selbst, daß im Hinblick auf die Gleichmäßigkeit der Bewegung auch zwei doppelt wirkende (bzw. entsprechend viele einzeln wirkende) Zylinder vorgesehen sein können. Für eine symmetrische Schweißschienenbewegung sind beide Schweißschienenhalter gegeneinander bewegbar. Diese Bewegung kann in der vorbeschriebenen Weise ausgeführt werden, wobei jeder der Schweißschienenträger mit einem eigenen Antrieb versehen ist und beide Antriebe aufeinander abgestimmt sind. Vorteilhaft ist es beide Schweißschienenträger gegeneinander verschwenkbar auszubilden, wobei beide Schweißschienenträger zwei im Abstand voneinander angeordnete Schwenkachsen schwenkbar sind und beide Schweißschienenträger miteinander kämmende Zahnsegmente aufweisen, die die Bewegung des einen Schweißschienenträgers zwangsläufig auf den anderen Schweißschienenträger übertragen. Hierbei genügt ein auf einen der Schweißschienenträger wirkender Antrieb.

Die Schweißschienen selbst werden vorteilhaft mit einem Niederhalter versehen, dadurch kann die auf das Ummantelungsmaterial auszuübende Kraft vergrößert werden. Diese Niederhalter sind federnd auf einer oder beiden Seiten des Grundkörpers der Schweißschiene befestigt, wobei Gleitstücke die eigentlichen Niederhalter tragen und diese gegen den Grundkörper der Schweißschiene mit Druckfedern abgestützt sind. Den Hub der Niederhalter begrenzende Verschraubungen können seitlich in Ausnehmungen vorgesehen sein, sie können auch als in Hubrichtung liegende Schaftschrauben ausgebildet sein. Das in der Frontebene der Schweißschiene liegende Heizband, das über eine Impulsschaltung beim Schließen mit einem seine Temperatur über Schmelztemperatur des Schweißmaterials erhöhenden Stromimpuls versorgt wird, ist gegenüber dem Grundkörper der Schweißschiene elektrisch und thermisch isoliert, so daß die Wärmeverluste möglichst gering gehalten sind. Trotzdem noch übertretende Wärme kann über im Grundkörper vorgesehene und von einem Kühlmittel durchflossene Kanäle abgeführt werden. Zum besseren Trennen der Schweißstelle ist eines der Heizbänder mit einer mittig verlaufenden vorgewölbten Sicke versehen, die eine Erhöhung der Pressung im Mittelbereich der Schweißnaht bewirkt und die Trennung begünstigt. Da beim Sicken eine geringfügige Querschnittsverringerung eintritt ist die Temperatur im Sickenbereich gegenüber der Temperatur der seitlichen Abschnitte des Heizbandes geringfügig erhöht, dies begünstigt das Abtrennen.

Um das bei einigen Kunststoffen ausgeprägte "Kleben" des Materials an der Schweißschiene beim Verschweißen zu vermeiden wird die Frontseite der Schweißschiene und ggf. auch die Niederhalter mit einem Trennbelag versehen. Als Trennbelag eignet sich eine feste Auflage, z.B. aus Polytetrafluorethylen. Dieser Trennbelag kann fest aufgebracht sein, er kann auch als geformte Folie aufgesetzt werden. Vorteilhaft ist es jedoch einen erneuerbaren Trennbelag vorzusehen, in Form einer Folie, in Form eines Glasseitengewebes, eines PTFE-beschichteten oder grafitierten Glasseitengewebes o.dgl., die von einer Vorratsrolle abgezogen, um die Vorderseite der Schweißschiene ggf. mit Niederhaltern geführt zu einer Aufwickelrolle für das verbrauchte Material verläuft (wobei im Zuge des Verlaufs der Geometrie folgend Umlenkrollen, ggf. auch als Spannrollen ausgebildet, eingeschaltet sein können). In einfachster Weise wird die erneuerbare Trennfolie von Zeit zu Zeit von Hand vorgeschoben. Dieser Vorschub kann selbstverständlich auch mit der Hubbewegung der Schweißschienenträger gekoppelt sein, wobei nicht jeder Hub zu einem Vorschub der Trennfolie führen muß. Ein eigener Antrieb für den Trennfolien-Vorschub stellt sicher, daß ständig in ihrer Wirkung nicht beeinträchtigte Trennfolie im Frontbereich der Schweißschiene vorliegt und daß der Verbrauch sparsam gehalten wird. Dazu sind vorzugsweise als Hydraulikzylinder ausgebildete Antriebseinheiten mit der Aufwickelwalze gekoppelt, die z.B. bei jedem n-ten Hub des Schweißschienenträgers eine Hubbewegung für den Trennfolie-Vorschub bewirken. Dabei wird vorteilhaft ein Klinkenstangen/Klinkenrad-Getriebe benutzt, bei dem nur eine Bewegungsrichtung zum Vorschub führt, während die andere Bewegungsrichtung im Sinne eines Freilaufs ohne Wirkung bleibt.

Die Hubbewegung der Schweißbalkenträger wird vorteilhaft durch Schaltglieder begrenzt, wobei ein mit einem Schweißbalkenträger verbundener Fühler-Stössel mit entsprechenden Begrenzungsschaltern zusammenwirkt und auf dem Fühler-Stössel entsprechende Schaltglieder, wie Schaltkörper oder Schaltnocken vorgesehen sind. Zum Einstellen des Hubes können diese Schaltkörper oder Schaltnocken in ihrer Position verlagert werden, so daß unterschiedliche Körperdurchmesser ebenso berücksichtigt werden können, wie unterschiedliche Schweißbahnmaterialdicken und unterschiedliche Schweißdrücke.

Um ein einwandfreies Einlaufen der Schweißbahn in den Schweißbereich zu ermöglichen sind in Höhe der auseinander gefahrenen Schweißschienen zwischen diesen und der Schweißbahn Einlaufwalzen vorgesehen, um die sich beim Einführen des zu um mantelnden Körpers die Schweißbahn legt, so daß eine Berührung mit scharfen Kanten an den Schweißschienen ausgeschlossen ist. Um einen gleichmäßigen Vorschub der Schweißbahn bei Zuführung von beiden Seiten zu erreichen sind beide Einlaufwalzen miteinander über eine Synchronisierungskette oder einen Synchronisierungsriemen in ihrer Bewegung miteinander gekoppelt. Die Synchronisierungskette bzw. der Synchronisierungsriemen ist dabei über eine Umlenkwalze geführt, so daß beide Walzen sich mit gleicher Winkelgeschwindigkeit, jedoch entgegengesetztem Drehsinn drehen. Dadurch wird von beiden Seiten her die gleiche Menge an Schweißbahn in den Schweißbereich eingeleitet, so daß die bei der vorherigen Schweißung gelegte, beide Schweißbahnen verbindende Schweißnaht immer auf der Vorderseite des zu umschweißenden Körpers bleibt und die neue zum Ummanteln des Körpers notwendige Schweißnaht auf dessen Rückseite zu liegen kommt.

Eine andere Möglichkeit die Schweißbahn von beiden Seiten gleichmäßig zuzuführen besteht darin, daß jede der Einlaufwalzen von einem eigenen Antriebsmotor angetrieben wird, wobei diese Antriebsmotoren beispielsweise als Schrittmotoren ausgebildet von ihrer Bauart her die Synchronisierung gewährleisten.

Der von den Ausgleichsschlaufen ausgeübte Zug, der ggf. durch in den Schlaufen liegende, frei mitlaufende Belastungswalzen verstärkt sein kann, wird über die Schweißbahn auf die an der Schweißstelle gebildete Schlaufe übertragen und zieht diese nach dem Abschweißen und Öffnen der Schweißschienen "glatt". Dabei sind die synchronisierten Einlaufwalzen derart ausgebildet, daß sie in Gegenlaufrichtung frei laufen können. Die Ausgleichsschlaufen selbst dienen der Überwachung des Bandvorrates, wobei durch ein unteres Sensorenpaar der Schweißbahn von der Vorratsrolle abziehende Antrieb dann stillgesetzt wird, wenn das durchhängende Schlaufenende in den Sensorbereich gelangt. Nimmt die Durchhängtiefe der Ausgleichsschlaufe ab wird der Antrieb dann zugeschaltet, wenn das durchhängende Ende der Schlaufe den empfindlichen Bereich des oberen Sensorenpaares verläßt. Ein darüber angeordnetes Sensorenpaar signalisiert, daß trotz eingeschalteten Antriebs Schweißbahn nicht nachgeliefert wird und meldet Störung bzw. aktiviert eine "Not-Aus-Schaltung", sofern die Schweißbahn den für das Abziehen von der Vorratsrolle notwendigen Zug aushält kann von einem gesonderten Antrieb für das Abziehen von der Vorratsrolle und auf die Ausgleichsschlaufe verzichtet werden; es versteht sich in diesem Falle von selbst, daß dann die Sensorensteuerung entfällt und der Bandvorschub mechanisch - etwa über die Bestimmung der Zugkraft über eine federnd aufgehängte Umlenkwalze - überwacht wird.

Das Wesen der Erfindung wird beispielhaft anhand der Figuren 1 bis 12 beschrieben. Dabei zeigen schematisch

Fig. 1 eine mehrfach geschnittene Frontansicht einer Vorrichtung mit einseitiger Schaumstoffbahn-Zufuhr

Fig. 2 einen seitlichen Einblick in eine Vorrichtung mit beidseitiger Schaumstoffbahnzufuhr

Fig. 3 Einzelheit Hubmechanismus und Trennfolienzuführung

Fig. 4 seitlicher Einblick in die Vorrichtung mit Kettenförderer zur Zuführung der zu umschweißenden Teile

Fig. 5 Einzelheit gegeneinander schwenkbarer Schweißschienenhalter mit Schweißschienen

Fig. 6 Einzelheit Schweißschienenquerschnitt

Fig. 7 Einzelheit Strammer-Einrichtung (in Förderrichtung gesehen)

Fig. 8 Einzelheit Klemmkopf für Strammer-Einrichtung (quer zu Fig. gesehen)

Fig. 9 Weitenverstellbarkeit der Schwenkhebel

Fig. 10 Seitenverstellbarkeit der Förderketten

Fig. 11 Schaumstoffbahn-Einlenkung mit Zuführungs-Synchronisierung

Fig. 12 Arbeitsablauf des Ummantelns (Schnittfolge 12a-12d)

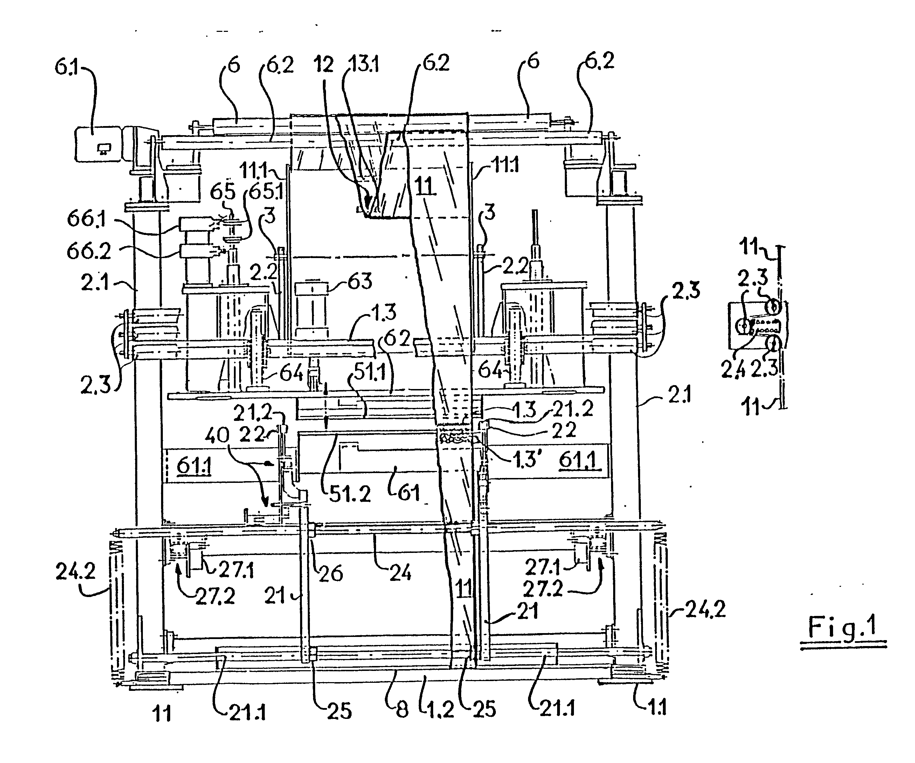

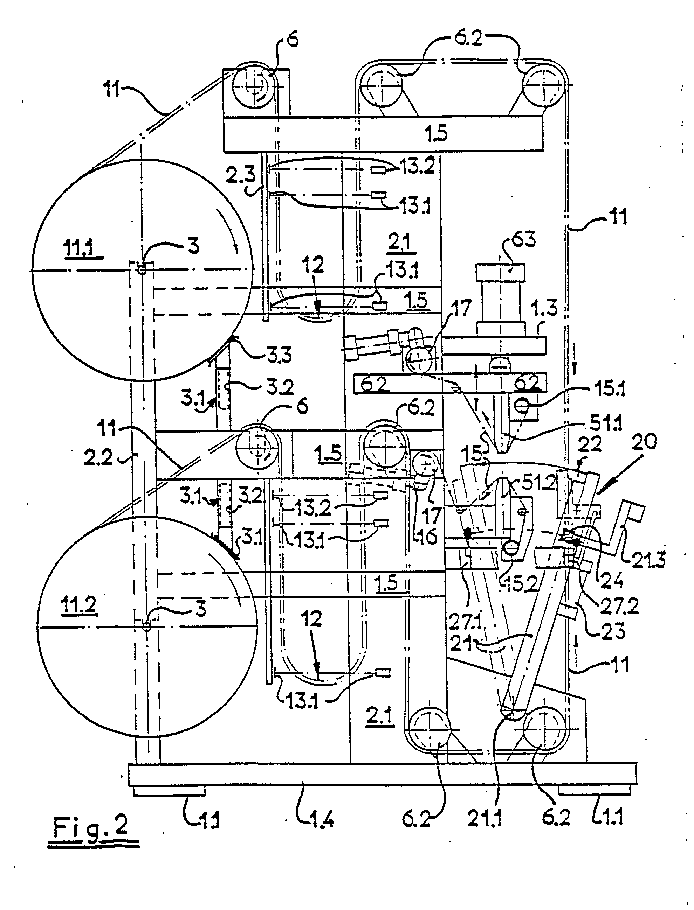

Die Fig. 1 zeigt eine Frontansicht der Vorrichtung zum Einschweißen zylindrischer Körper in eine Schaumstoffbahn 10, wobei diese Vorrichtung in ein Grundgerüst eingebaut ist, das von auf zwei Füßen 1.1 aufgebauten vertikalen Gerüstträgern 2.1 und diese verbindenden unteren und mittleren Querholmen 1.2 und 1.3 gebildet ist. Die vertikalen Gerüstträger 2.1 bzw. die Querholme sind untereinander mit Längsholmen 1.5 verbunden, so daß sich ein stabiles Gerüst ergibt. Die Vorratsrolle 11.1 für die Schweißbahn 11 ist in Gabellagern 3 die an dem Rollenträger 2.2 angeordnet sind eingelegt. Von da aus wird die Schweißbahn über eine angetriebene Walze 6 abgezogen und über Umlenkwalzen 6.2 geführt. Dabei ist dafür Sorge getragen, daß sich zwischen der angetriebenen Walze 6 und der ersten der Umlenkwalzen 6.2 eine Ausgleichsschlaufe 12 ergibt, die die ungleichmäßige Fortbewegung der Schweißbahn 11 beim Umhüllen des einzuschweißenden Körpers 9 ausgleicht. Diese Ausgleichsschleife wird gleichzeitig benutzt, um den Antrieb 6.1 der Antriebswalze 6 zu schalten; zu diesem Zweck sind aus Geber und Empfänger bestehende Sensoren 13.1 vorgesehen, wovon ein Geber/Empfänger-Paar im Bereich des unteren Poles der Schlaufe 12 liegt und den Antrieb 6.1 der Antriebswalze 6 ausschaltet, wenn die Ausgleichsschlaufe 12 hinreichend durchhängt, während das andere Geber/Empfänger-Paar 13.1 im Abstand darüber angeordnet den Antrieb einschaltet, wenn die Schlaufe 12 "zu kurz" wird. Für den Fall, daß eine weitere Verkürzung der Ausgleichsschlaufe eintritt - etwa durch Hängen des Antriebs - legt ein weiteres Geber/Empfänger-Paar 13.2 die gesamte Anlage im Sinne eines "Not-Aus" still. Somit ist gewährleistet, daß der Vortrieb nur dann in Betrieb geht, wenn Schweißbahn 11 verbraucht wird und daß die Anlage stillgesetzt wird, wenn störungsbedingt der Nachschub an Schweißbahn ausfällt. Zur Montage wird ein Sensorträger 2.3 (Fig. 2) jeweils entsprechend angeordnet, wobei es sich von selbst versteht, daß ein "Schiefziehen" der Schweißbahn dadurch verhindert werden kann, daß zwei in Querrichtung gegeneinander versetzte Sensorenanordnungen vorgesehen sind.

Zusätzliche Führungswalzen 2.3 - s. Einzelheitdarstellung -können das Nachziehen vergleichmäßigen, wobei eine aus der Schweißbahnebene heraus verlagert ist und eine schlaufenartige Schweißbahnführung erzwingt. Diese Umlenkwalzen 2.3 können gegeneinander verstellbar und mit Federn 2.4 vorgespannt sein. Dadurch läßt sich der Schlaufenzug einstellen und damit auch eine Hemmung der Bahnbewegung und ein Be wegungsausgleich erreichen, der - sofern die Schweißbahn dies erlaubt - die durchhängende Ausgleichsschlaufe 12 ersetzt.

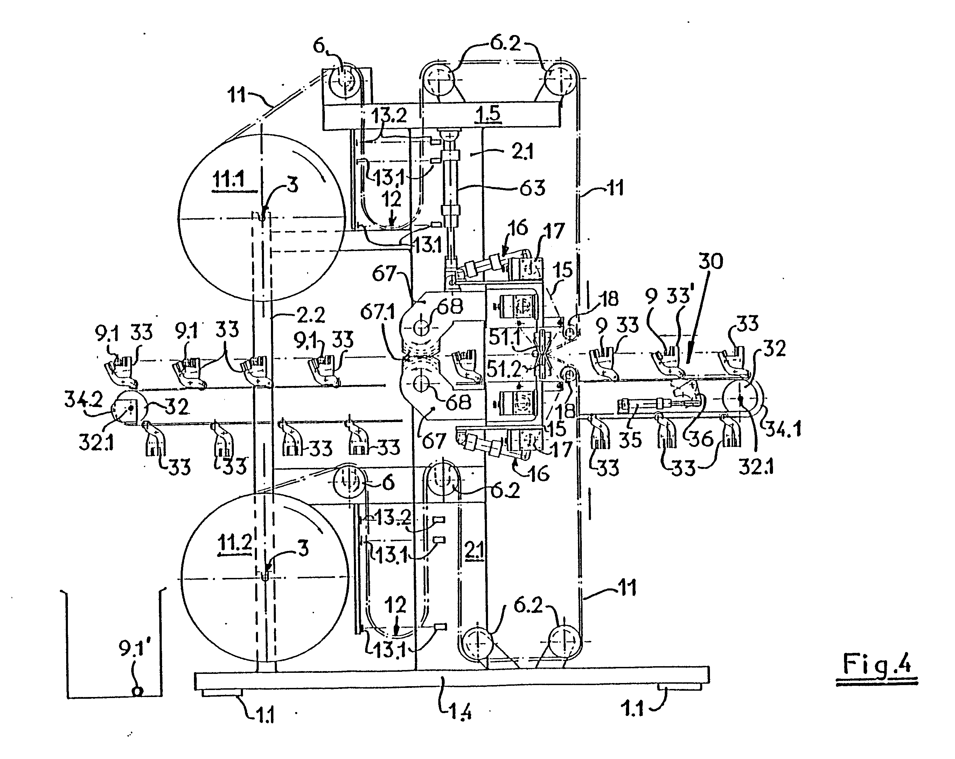

Die abgezogene Schweißbahn 11 wird quasi als Vorhang zwischen der Schweißschienen-Anordnung und dem zu umschweißenden Werkstück 9 geführt, das seinerseits auf einer Schwenkhebelanordnung 20 (Fig. 2) oder einem Umlaufförderer 30 (Fig. 4) duch die Ebene, in der die Schweißbahn 11 liegt, geführt wird. Dabei wird die Schweißbahn 11 mitgenommen und legt sich im Bogen um den einzuschweißenden Körper 9. Zum Schweißen werden die Schweißschienen 51.1, 51.2 zusammengefahren, so daß sich die Schweißbahn 11 mantelförmig um den Körper9legt und unmittelbar hinter dem Körper abgeschweißt wird. Die untere Schweißschiene 51.2 ist fest an dem unteren Schweißschienenträger 61 angeordnet, während die obere Schweißschiene 51.1 am heb- und senkbar aufgehängten oberen Schweißschienenträger 62 befestigt ist. Dieser wird mit dem Antriebszylinder 63 in vertikaler Richtung bewegt, wobei Führungsstangen 64 ein ausgerichtetes Verfahren des Schweißschienenträgersund damit des Schweißschiene ermöglichen. Ein Fühlerstössel 65 mit Schaltkörpern 65.1 wirkt dabei mit den Grenzschaltern 66,1 und 66.2 zusammen, so daß der Hub begrenzt wird. In der dargestellten Ausführungsform wird die Schweißbahn 11 einseitig zugeführt, ds Gegenstück ist an einer Spannwalze 8 befestigt.

Durch diese Art der Ausführung ergibt sich notwendigerweise, daß jede Schweißnaht 11.3 unmittelbar an der vorhergehenden 11.3 (schematisch durch Wellenlinien angedeutet) liegen würde. Um dies zu vermeiden wird die Spannwalze 8 bei jedem Hub der Schweißschiene durch einen nicht näher dargestellten einfachen Zahn-Klinkenantrieb geringfügig weiterbewegt. Es versteht sich von selbst, daß hierzu ein einfacher Zylinder eingesetzt werden kann, auch ist ein Zusammenwirken mit der Schwenkhebelanordnung 20 denkbar, deren Schwenkachse 21.1 als mitbewegte Achse ausgebildet den Vorschub auf die Spannwalze 8 überträgt.

Die Schwenkhebelanordnung 20 besteht aus den beidseits der Schweißstelle angeordneten Schwenkhebeln 21, die um bzw. mit der Schwenkachse 21.1 verschwenkt werden können. Dazu dient zweckmäßigerweise eine im Abstand von der Achse 21.1 angesetztes Quergestänge 24, das mit dem Antrieb verbunden und mit Federn 24.1 entlastet und in seine Ausgangslage rückholbar das Antriebsgestänge bildet. Der Antrieb erfolgt in einfacher Weise manuell mittels der Handgriffe 21.2. Diese werden zweckmäßigerweise - aus Gründen der Arbeitssicherheit - als Zweihand-Bedienungshebel ausgebildet und mit einem Not-Aus-Schalter versehen. Für einen auto matischen Antrieb kann eine Zylinderanordnung vorgesehen sein, die so eingestellt ist, daß sie im hinteren Totpunkt mit dem zu umhüllenden Körper 9 gerade außerhalb des Schweißschienenbereichs liegen und die im vorderen Totpunkt frei von der dann glatt herunterhängenden Schweißbahn 11 liegen und so die Entnahme des umschweißten Körpers wie auch das Einlegen des zu umschweißenden in einfacher Weise erlauben. Anschläge 27.1 und 27.2, die auch mit Endschaltern versehen sein können gewährleisten, daß die Schlaufe der Schweißbahn in der für das Umschweißen des länglichen Körpers richtigen Größe gebildet wird. Der vordere Anschlag 27.2 bzw. der vordere Endschalter verhindert, daß ein Schweißvorgang unbeabsichtigt ausgelöst wird. Eine Klemmgabel 22 spannt dabei mit Hilfe eines Zylinders den Körper, wobei dieser durch eine Seitwärtsbewegung mindestens einer der Klemmgabeln 22 nach außen gestrammt wird.

Die Fig. 2 zeigt einen schematischen Einblick in die Vorrichtung von der Seite, wobei vom Grundgestell die auf den Füßen 1.1 angeordneten unteren Holme 1.2 sowie der darauf aufbauende vertikale Geräteträger 2.1 mit den Längsholmen 1.5 zu erkennen ist. In der hier gezeigten Vorrichtung wird die Schweißbahn 11 beidseitig zugeführt, daher sind zwei Vorratsrollen 11.1 und 11.2 in zwei Lagern 3 am Rollenträger 2.2 vorgesehen. Beide Schweißbahnen 11 werden von angetriebenen Walzen 6 abgezogen und hängen danach in der Ausgleichsschlaufe 12 durch, an der Sensorenpaare 13.1 bzw. 13.2 den verfügbaren Vorrat abfühlen. Umlenkrollen 6.2 bringen dann das Schweißband 11 von oben kommend bzw. von unten kommend zur Schweißstelle mit der Schweißnaht 11.3, die von der vorhergehenden Schweißung zurückgeblieben ist. Diese Schweißstelle 11.3 liegt dabei in Höhe der Klemmgabel 22 der Schwenkhebelanordnung, so daß der von der Schwenkhebelanordnung 20 geführte Körper9die Schweißbahn 11 erfassend die vorherige Schweißstelle 11.3, auf der der neuen Schweißstelle abgewandten Seite vor sich herschiebt. Dabei vollführt die Schwenkhebelanordnung 20 die entsprechend dem Doppelpfeil eingezeichnete Bewegung, während beide Schweißbahnen sich gegeneinander bewegen und der obere Schweißschiene entsprechend dem eingezeichneten Doppelpfeil eine ab- bzw. aufwärtsgerichtete Bewegung macht.

Um ein Ankleben der Schweißbahn 11 an den Schweißelektroden 51.1 bzw. 51.2 zu verhindern sind Trennfolien, z.B. Glasseitengewebe o.dgl. 15 über die Schweißschienen 51 geführt, so daß eine direkte Berührung der Schweißbahn mit dem Metall der Schweißschiene 51 verhindert wird. Diese Trennfolien werden von dem Trennfolien-Vorrat 15.1 bzs. 15.2 abgezogen,durch-nicht näher bezeichnete - Umlenkrollen über die Schweißelektroden geführt und auf die Aufwickelrollen 17 aufgespult , wobei der Antrieb durch den Arbeitszylinder 16 bewirkt wird, der in einer Schubrichtung die Rolle mitnimmt, in der anderen über eine Freilaufeinrichtung ohne Mitnahme der Rolle zurückgleitet. Es versteht sich von selbst, daß die der oberen Schweißschiene 51.1 zugeordnete Trennfolieneinrichtung auf dem mitbewegten oberen Schweißschienenträger 62 angeordnet, die Vertikalbewegung der Schweißschiene mitmacht.

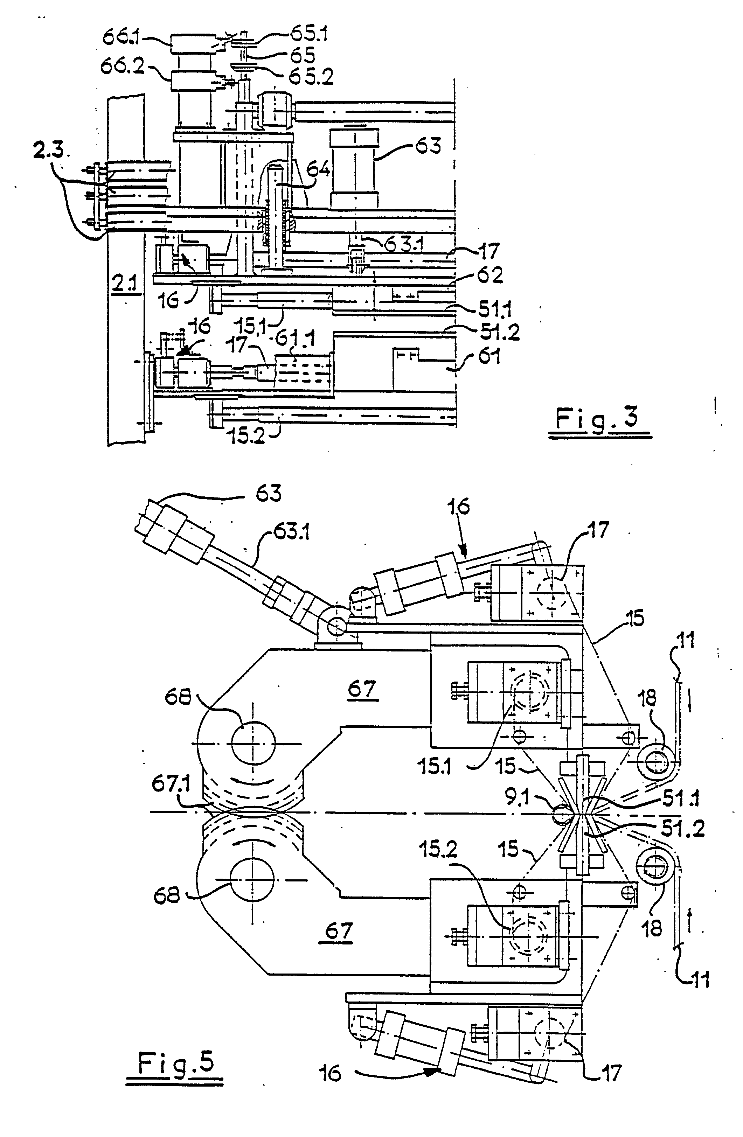

Die Fig. 3 zeigt in vergrößerter Abbildung nochmals die Verhältnisse im Bereich der Schweißschiene 51.1 und 51.2 mit dem Trennfolienvorrat 15.1 und 15.2 sowie der Trennfolienaufwickelung mit den Rollen 17 und der zugehörigen Antriebe 16. Der Antriebszylinder 63, der über eine Schubstange oder direkt den oberen Schweißschienenträger 62 mit der daran befestigten Schweißschiene 51.1 bewegt, wird über die Führungsstange 64 parallel geführt. Der Fühlstössel 65 mit seinen Schaltkörpern 65.1 steuert die Grenzschalter 66.1 und 66.2, mit denen der Hub des Zylinders 63 begrenzt wird. Da der Zylinder 63 den oberen Schweißschienenträger 62 in beiden Richtungen aktiv bewegt, ist er als doppelt wirkender Zylinder ausgebildet.

Die in Fig. 4 dargestellte Weiterbildung der Vorrichtung ist in gleicher Weise geschnitten wie die in Fig. 2. Zwei Vorratsrollen 11.1 und 11.2 für das Schweißband 11 sind vorgesehen, das von beiden Seiten her gegen die Schweißstelle geführt wird. Der Vorschub des Schweißbandes 11 erfolgt dabei in der gleichen Weise über die angetriebenen Rollen 6 und die Umlenkrollen 6.2 es wird auch in einer Ausgleichsschleife 12 geführt, deren "Durchhängen" mit Sensoren 13.1 abgetastet wird, wobei auch hier ein weiteres Sensorpaar 13.2 als Sicherheitselement vorgesehen ist.

Die als gegeneinander schwenkbare Schwenkhebel ausgebildete Schweißschienenträger 67 sind mit zusammenwirkenden Zahnsegmenten 67.1 versehen, die ineinander kämmen und die beim Schwenken des einen der Schweißschienenträger 67 um die Schwenkachse 68 durch den Antriebszylinder 63 den anderen zwangsläufig mitnehmen. In der Darstellung sind die Schweißschienenträger 67 geschlossen gezeichnet, die Schweißschiene 51.1 und 51.2 liegen aufeinander, die Schweißbahn 11- von beiden Seiten kommend-ist eingezogen und umhüllt den unmittelbar hinter den Schweißschienen 51.1 bzw. 51.2 liegenden Körper 9.

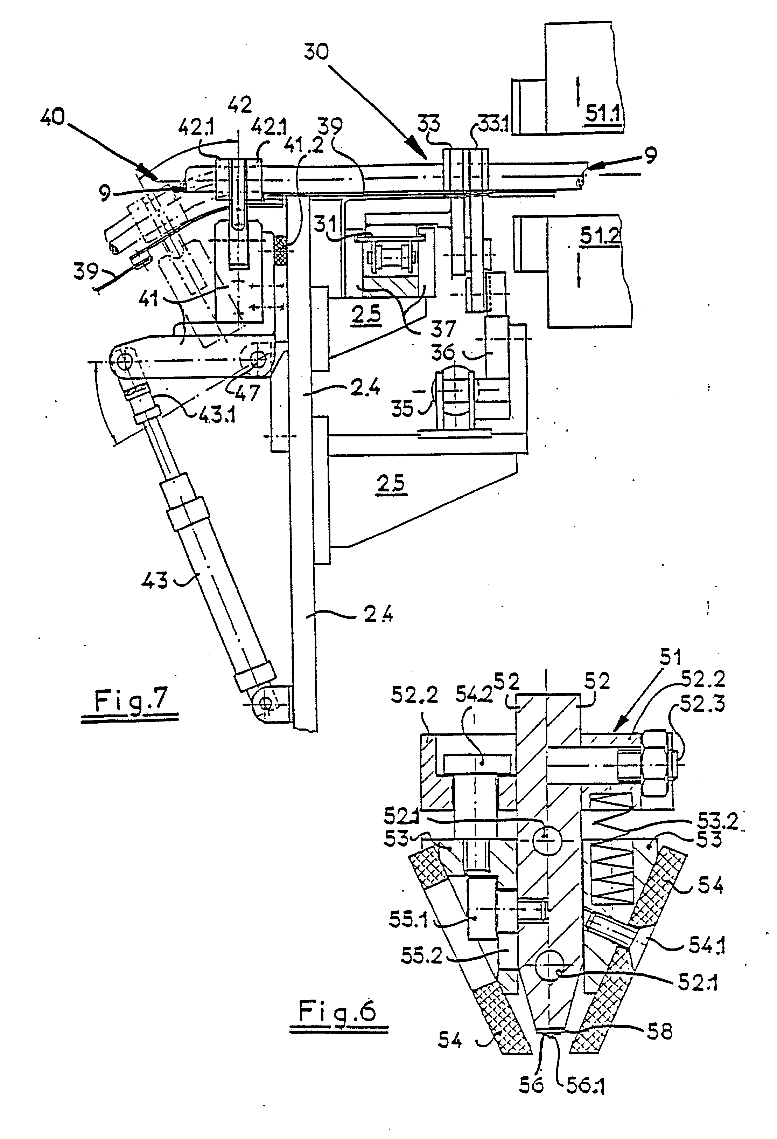

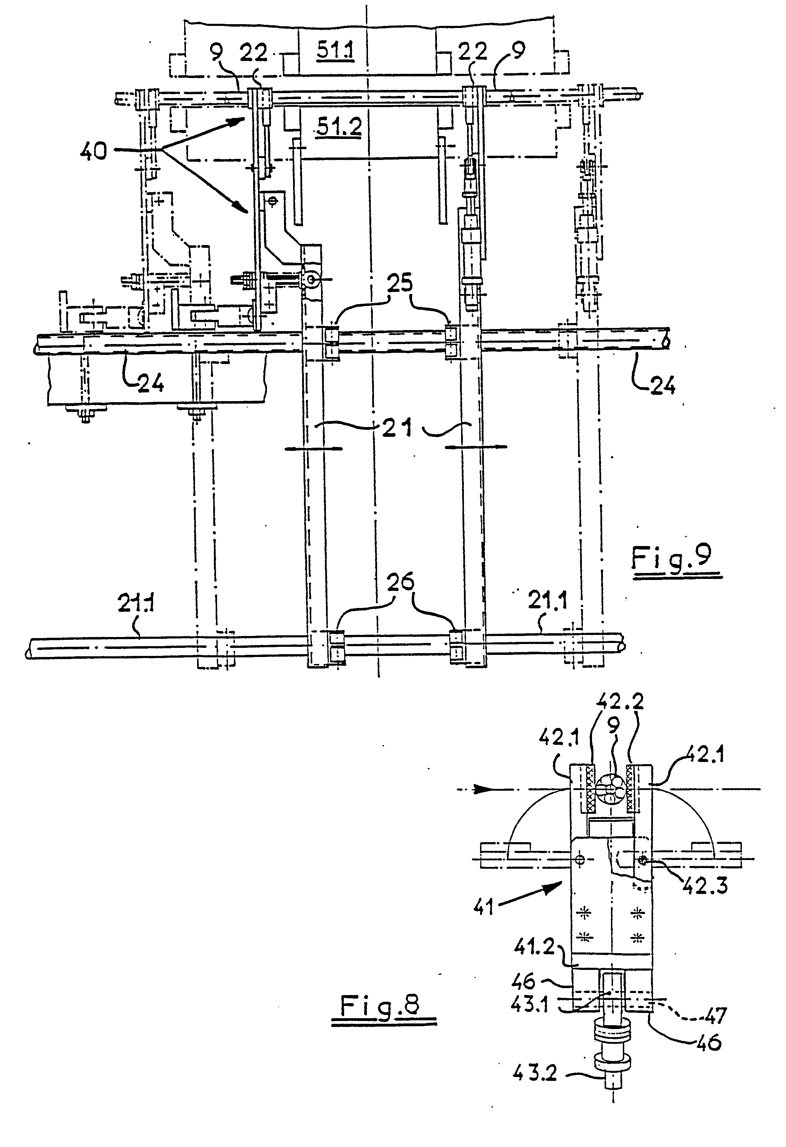

Die Zuführung der zu umschweißenden Körper 9 erfolgt hier mit einem umlaufenden Förderer 30, auf dessen Umlaufband bzw. Umlaufkette o.dgl. 31 eine Anzahl von Klemmgabeln 33 angeordnet sind, deren Antrieb - nicht näher dargestellt - in üblicher Weise erfolgt. Diese Klemmgabeln werden im Ruhezustand durch-nicht näher bezeichnete-Federn im geschlossenen Zustand gehalten. Beim Erreichen des vorderen Umlenkrades 32 läuft der bewegliche Teil 33.1 der Klemmgabel 33 auf eine Kurve 34.1 auf.die diesen beweglichen Teil 33.1 abspreizt und die Klemmgabel zum Einlegen des zu umhüllenden Körpers 9 öffnet. Beim Vorrücken schließt dann die Klemmgabel automatisch und fixiert den Körper. Um den Körper vor dem Umschweißen ausrichten zu können wird die Klemmgabel hinter der Einlegstation nochmals durch einen Öffnerzylinder 35 geöffnet, der mit Hilfe des Winkelhebels 36 den beweglichen Teil 33.1 der Klemmgabel 33 anhebt. Dies erfolgt einseitig und zwar auf der Seite, auf der eine Strammer- Einrichtung 40 vorgesehen ist, die - während des Lösens der Klemmgabel 33 aktiviert - den erfaßten Körper, z.B. einen Kabelbaum, durch eine in Körperrichtung wirkende Kraft stramm zieht und ausrichtet. Dabei wird durch eine seitliche Verriegelung die zu öffnende Klemmgabel 33' über den Öffnerzylinder 35 erst dann geöffnet, wenn der Strammergreifer 42 (Fig.7/8) in Klemmstellung gebracht ist, die erst wieder gelöst wird, wenn der Öffnerzylinder 35 gelöst und die Klemmgabel 33 wieder geschlossen ist. Auf diese Art kommt ein strammgezogener und ausgerichteter Körper 9 in den Bereich der Schweißschienen wird dort mit einem Schweißbahnmantel versehen und verläßt als ummantelter Körper 9.1 die Schweißstelle. Die hintere Umlenkrolle 32 ist mit einem Öffnernocken 34.2 versehen, der die Spanngabel 33 beim Durchgang öffnet und den umhüllten Körper 9.1 in einen - nicht näher bezeichneten-Auffangbehälter als abgeworfenes Fertigteil 9.1 abfallen läßt. Es versteht sich von selbst, daß die schwenkbaren Schweißschienenträger 67 auch für die Einzelzuführung mit einer Schwenkhebeleinrichtung 20 geeignet sind.

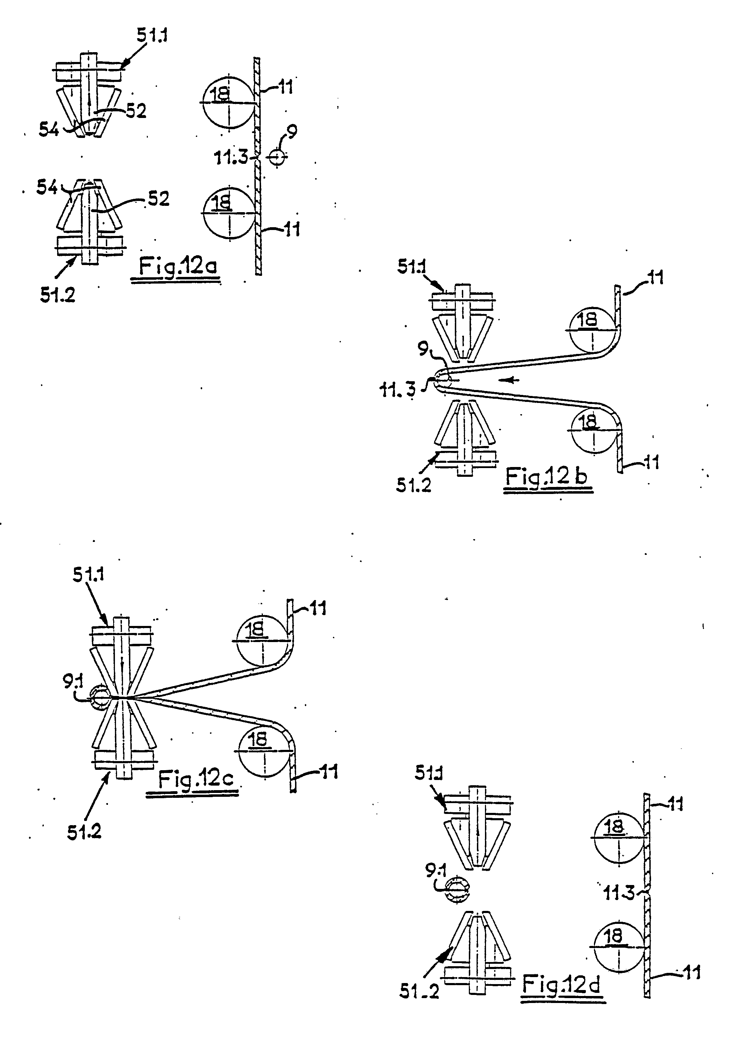

Die Fig. 5 zeigt diese Schwenkhebel-Schweißschienenträger67noch einmal vergrößert und unabhängig von der Art der Zuführung der zu umhüllenden Körper. Die um die Achsen 68 schwenkbaren Schweißschienenträger 67 sind mit miteinander kämmenden Verzahnungen 67.1 versehen, die bei der Bewegung des einen Schweißschienenträgers mit Hilfe des Arbeitszylinders 40 zwangsläufig eine symmetrische Bewegung des zweiten Schweißschienenträgers bewirken. Beide schwenkbaren Schweißschienenträger 67 sind mit den Antriebseinheiten 16 zum Vorschub der Trennfolie 15 mit Aufwickelrollen 17 und auch mit dem entsprechenden Trennfolienvorrat 15.1 und 15.2 versehen. Beide Vorrichtungen sind hier mitbewegt, so daß Trennfolie 15 und Schweißschiene 51 beim zum Verschweißen notwendigen Hub keine Relativbewegung gegeneinander ausführen. Die Schweißbahn 11 wird beidseits symmetrisch der Schweißstelle zugeführt, sie wird dabei über Einlaufwalzen 18 in den Schweißbereich geleitet, wobei - dies liegt in der Natur der Anordnung - die den zu umschweißenden Körper9haltenden Vorrichtungen seitlich an diesen Einlaufwalzen vorbeigehen. Um einen gleichmäßigen Zulauf der Schweißbahn 11 zu erreichen ist es vorteilhaft, wenn die beiden Einlaufwalzen 18 zwangsweise synchronisiert sind (Fig. 11).

Die Fig. 6 zeigt einen Schnitt durch eine Schweißschiene 51, die zum besseren Erfassen der Schweißbahn mit Niederhaltern 54 versehen ist. Diese Niederhalter 54 sind bewegbar am Grundkörper 52 gehalten, wobei Einsätze 52.2 als Begrenzungslager für die Niederhalter seitlich an dem Grundkörper befestigt sind. Zu diesen Begrenzungslagern laufen Schaftschrauben 54.2, die die Bewegung der Gleitkörper 53 mitmachen. Der Schnitt ist dabei in unterschiedlichen Querebenen so geführt, daß die rechte Schnitthälfte ein Federelement 53.2 und die linke Schnitthälfte einen Gleitstein 55.1 erfaßt. Die Niederhalter 54 sind auf einem Gleitkörper 53 mit Hilfe von Befestigungsschrauben 53.1 montiert. In dem Gleitkörper befinden sich - nicht näher bezeichnete - Bohrungen, in denen Druckfedern 53.2 eingesetzt sind, die gegen den Grundkörper 52 der Schweißschiene 51 abgestützt sind. Unter der Wirkung der Druckfeder liegen im Ruhezustand die vorderen Enden der Niederhalter unterhalb des Heizbandes 56. Um die Niederhalter 54 mit den Gleitkörpern 53 leichtgängig am Grundkörper 52 der Schweißschiene zu befestigen, sind Kragenschrauben 55.1 in den Grundkörper eingeschraubt, deren Kragen in einem Langloch 55.2 des Gleitkörpers gleiten, wobei der Kopf der Kragenschrauben 551. den Gleitkörper 53 gegenüber dem Grundkörper 52 fixieren. Das Heizband 56 ist mit einer elektrisch isolierenden und den Wärmedurchgang behindernden Zwischenlage 58 auf die Stirnseite des Grundkörpers 52 aufgebracht, wobei mittig im Heizband eine Sicke 56.1 ausgebildet ist. Durch diese Sicke 56.1 wird ein sicheres Abschweißen der Schweißbahn bewirkt, wobei eine durch das Prägen bedingte geringe Querschnittsverringerung im Bereich der Sicke eine geringfügige Übertemperatur entstehen läßt, die das Trennen an der Schweißstelle begünstigt. Zur Abfuhr doch in den Grundkörper übertretender Wärme sind Längsbohrungen 52.1 von einem Kühlmitteldurchfluß vorgesehen.

Die Fig. 7 und 8 zeigen die Strammereinrichtung 40 im Zusammenwirken mit dem Umlaufförderer 30 sowie dem Strammergreifer. Auf einer Seite der beiden Schweißelektroden 51 ist der Umlaufförderer, der gestellfest über Konsolen 2.5 an der Trägeranordnung 1.9 auf das Grundgestell abgestützt ist, mit einem Öffnerzylinder 35 versehen, der über den Hebel 36 den beweglichen Teil 331. der Klemmgabel 33 zum Strammen öffnet, wenn der Strammergreifer 42 mit seinen Greiferarmen 42.1 geschlossen hat. Nach dem Schließen des Strammergreifers 42 wird der Strammerzylinder 43 aktiviert, der den als Winkelhebel ausgebildeten Strammerhebel 41um den Drehbolzen 47 schwenkt und nach außen zieht und dabei den auf der anderen Seite durch die gegenüberliegende (und in dieser Fig. nicht dargestellte) Klemmgabel gehaltenen Körper 9 strammt und ausrichtet. Nach dem Ausrichten wird zunächst die Klemmgabel 33 durch Entlastung des Öffnerzylinders 35 geschlossen, wobei das Schließen unter der Wirkung der der Klemmgabel eigenen Federkraft bewirkt wird. Wenn die Klemmgabel 33 geschlossen ist, klappen die Greiferarme 42.1, wie in Fig. 8 gezeigt voll auf, so daß die Greiferarme in Förderrichtung stehend kein Hindernis für den zu fördernden Gegenstand darstellen. Die Klemmflächen der Greiferarme 42.1 sind mit einem Reibungsbelag 42.2 belegt, der ein sicheres Fassen des zu klemmenden Körpers 9 bewirkt. und deren Form der Form des zu klemmenden Körpers angepaßt sein kann. Im allgemeinen Fall wird eine prismatische Aussparung oder eine schalenförmige Ausbildung genügen. Die Klemmarme 42.1 besitzen jeweils einen eigenen -nicht näher dargestellten - Antriebszylinder, die die zum Klemmen des zu strammenden länglichen Körpers notwendige Kraft aufbringen und die das vollständige Öffnen - das Schwenken der Klemmarme um 90° bewirken.

Der Winkelhebel 41 des Strammers wird durch den Zylinder 43 betätigt, der über den an der Zylinderstange 43.2 befindlichen Kopf 43.1 gelenkig mit dem einen Schenkel des Winkelhebels 41 verbunden ist. Die Darstellung der Fig. 7 läßt auch erkennen, wie die Transporteinrichtung gegen Verschmutzung geschützt ist: Übergreifende Abdeckelemente 39 sind oberhalb der Transporteinrichtung vorgesehen. Ein in Förderrichtung verlaufender Schlitz, der mit einer Bürste abgedeckt ist, erlaubt das Durchleiten der Klemmgabeln 33. In gleicher Weise kann auch die Schwenkhebelanordnung 20 abgedeckt werden. Die Strammerarme 42.1 liegen in Ruhestellung an Anschlägen 41.2, die eine Justage gestatten und darüber hinaus auch beim Anschlagen die Geräuschentwicklung dämpfen. Es versteht sich von selbst, daß bei einer Schweißbreitenverstellung seitlich verlagerbare Förderketten, deren Träger 37 und die Strammereinrichtung 40 nicht fest am Grundgestell, sondern auf der Welle 32.1 für das vordere Umlenkrad 32 verschiebbar angeordnet ist. Ein zusätzlicher parallel zu dieser Welle 32.1 verlaufender Träger kann als zusätzliche Abstützung vorgesehen sein.

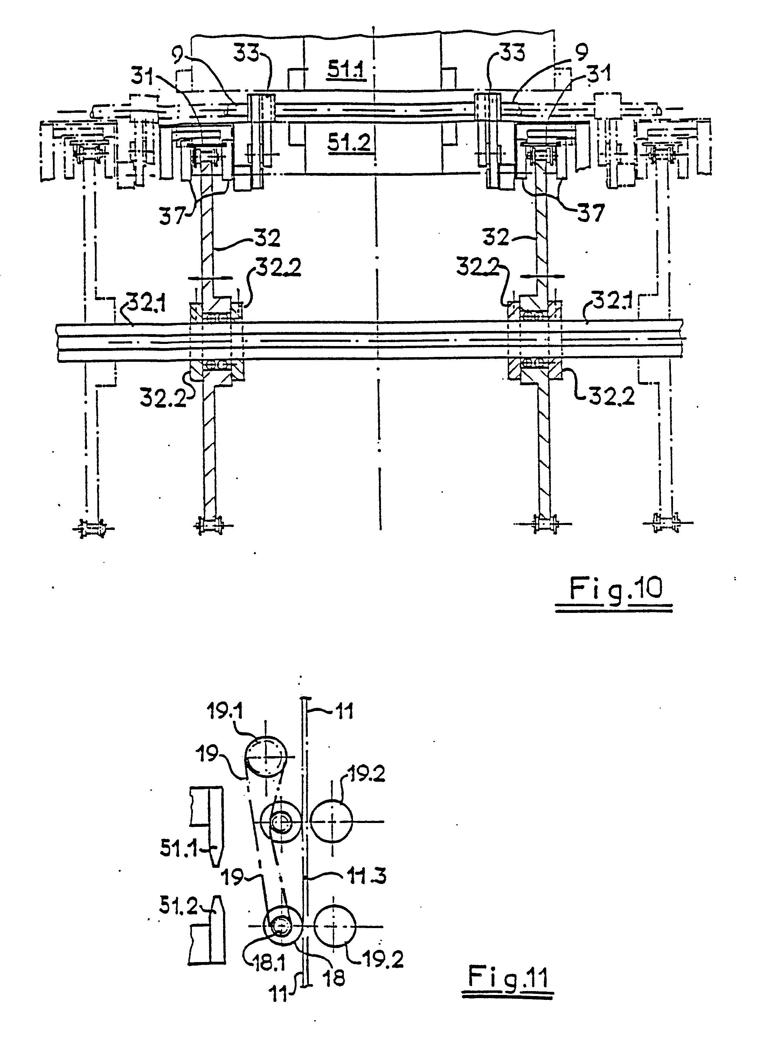

Die Fig. 9 und 10 zeigen eine Weiterbildung der Vorrichtung, bei der die Schweißbreite veränderbar ist. Bei der Zuführung der zu umschweißenden Körper 9 mittels der Schwenkhebel 21 (Fig. 9), sind die Schwenkhebel 21 auf der Schwenkhebelachse 21.1 und auf dem Querrohr 24 des Antriebsgestänges verschieblich gelagert. Dazu sind die Schwenkhebel 21 mit Schiebelagern 25 bzw. 26 versehen. Diese Schiebelager können über Klemmringe, Stiftschrauben o.dgl. auf der Schwenkachse 21.1 bzw. dem Querrohr 24 des Antriebsgestänges in dem gewünschten Ab stand voneinander festgelegt werden. Die Schweißschienen 51.1 und 51.2 werden der gewünschten Schweißlänge entsprechend eingesetzt, sie sind austauschbar am Schweißschienenträger befestigt. Bei der Ausführungsform mit dem Umlaufförderer (Fig. 10) wird die Umlaufkette 31 über Umlenkräder 32 geführt. Diese Umlenkräder sind um die als Welle ausgebildete Achse 32.1 drehbar gelagert. Dieser quer zur Förderrichtung der Körper 9 verlaufende Achse wird über die gesamte Breite der Vorrichtung geführt und gegen das Grundgerüst abgestützt. Auf dieser so gebildeten Welle 33.1 können die Umlenkscheiben 32 verschoben und z.B. mittels Klemmringe 32.3 im gewünschten Abstand voneinander festgesetzt werden.Auch hier wird nach Einstellen der Länge des zu umschweißenden Körpers 9 durch seitliches Verstellen der Förderbahnen die dieser Länge entsprechenden Schweißschienen 51.1, 51.2 an die Schweißschienenhalter angebaut. So gelingt es in einfacher Weise Körper unterschiedlicher Länge (oder unterschiedlicher Umschweißungslängen) mit einem Schweißbahn-Mantel zu versehen. Besitzen die zu umschweißenden Körper Ansätze o.dgl. (z.B. Abgänge und Zuführungen bei Kabelbäumen) können die Schweißelektroden 51.1 bzw. 51.2 unterteilt sein. Die Schweißelektroden bilden so zwei oder mehr Paare, die gegeneinander stehen. Im Einlauf der Schweißbahn angeordnete Schneidvorrichtungen, z.B. Rollmesser, teilen die Schweißbahn auf, die dann lediglich in die Bereiche einläuft, die mit einem Schweißmantel zu versehen sind. Bei dünnen An sätzen (wie z.B. Kabelbaumabgängen) bedarf es dabei nicht des Ausschneidens eines Streifens, da das Ummantelungsmaterial hinreichend weich ist, um dem Abgang auszuweichen. Zum Verhindern von Störungen ist es vorteilhaft den Körper dabei auf einer seiner Form entsprechenden Gleitbahn zu führen, die - z.B. bei abstehenden Abgängen eines Kabelbaums - dafür sorgt, daß diese Ansätze bzw. Abgänge in Bezug auf die Förderrichtung eine definierte Lage einnehmen.

Die Fig. 11 schließlich zeigt die Einzelheit der für den Vortrieb vorteilhaften Synchronisierung bei doppelseitigem Einlauf der Schweißbahn 11 in die Schweißzone. Um die Schweißbahn 11 besser zischen den Schweißschienen 51.1 und 51.2 hindurchführen zu können sind Einlaufwalzen 18 vorgesehen, über die die Schweißbahn 11 umgelenkt an die Schweißschienen 51.1 und 51.2 geleitet wird, so daß die Schweißbahn 11 nicht von den Schweißschienen selbst bzw. deren Niederhaltern scharfkantig umgelenkt wird. Der Vorschub der beiden Schweißbahnen 11 soll dabei so gleichmäßig erfolgen, daß die Schweißnaht 11.3 immer mittig zum (nicht dargestellten) Körper 9 sitzt und beim Einführen des Körpers 9 so mitgenommen wird, daß die vorherige Schweißnaht 11.3 ,auf der der neuen Schweißnaht gegenüberliegenden Seite des Körpers liegt. Dazu dient eine Synchronisierung der Einlaufwalzen 18 mit einer Synchronisierungskette 19 bzw. einem Synchronisierungszahnriemen o.dgl., der formschlüssig an den Einlaufwalzen 18 angeordneten Mitnehmern 18.1 - bei Kette: Zahnrad - zusammenwirkt. Eine Umlenkrolle 19.1 sorgt für den Rücklauf der Synchronisierungskette 19. Mit dieser Einrichtung sind die Einlaufwalzen 18 synchronisiert. Gegen die Einlaufwalzen 18 gerichtete Andrückwalzen 19.2 verhindern ein Rutschen von Schweißbahnen 11 gegen Einlaufwalze 18, so daß die gewünschte Lage der Schweißnaht 11.3 erhalten bleibt.

In der Figurenfolge 12 ist schließlich das Ummanteln dargestellt, wobei die einzelnen Arbeitsschritte auseinandergezogen sind: Zunächst (Fig. 12a) ist der zu umschweißende Körper 9 auf der Frontseite der Vorrichtung und wird-gleichgültig ob mit Einzelförderung oder Stetigförderer-durch die Ebene der Schweißbahn 11 geführt und zwar in Höhe der Schweißnaht 11.3 . Die Schweißbahnen 11 legen sich um die Einlaufwalzen 18, wobei Schweißbahn 11 aus dem Vorrat der Ausgleichsschlaufe nachgezogen wird. Der Körper mit den mitgenommenen Schweißbahnen 11 gelangt dann durch die Schweißschienen 5.1 und 5.2 mit ihren Niederhaltern 54 hindurch (Fig. 12b), die dann nach Erreichen dieser Position gegeneinander gefahren werden (Fig. 12c). Sind die Schweißschienen 51.1 und 51.2 gegeneinander gefahren, wird ein Stromimpuls durch das Heizband 56 (Fig. 6) geschickt, das sich erwärmt und die Schweißbahnen beidseits der Sicke miteinander verschweißt. Durch die erhöhte Pressung im Bereich der Sicke wird die Schweißbahn in diesem Bereich getrennt, Hat das Heizband 56 im Bereich der Sicke einen geringfügig verringerten Querschnitt, kann eine (leichte) Temperaturerhöhung in diesem Bereich die Trennung begünstigen. Nach dem Abschweißen öffnen die Schweißelektroden 56.1 und 56.2 (Fig. 12d), der nunmehr umhüllte Körper 9.1 kann weiter transportiert bzw. entnommen werden. Die Schweißbahn 11 - nunmehr wieder vor den Einlaufwalzen gespannt - ist bereit für den nächsten Arbeitsschritt. Um die Spannung der Schweißbahn 11 zu erhalten,können die Ausgleichsschlaufen 12 (Fig. 2) mit lose mitlaufenden Walzen entsprechenden Gewichts versehen sein, wobei diese Walzen selbst auch mit den Sensoren zusammenwirken können, so daß u.U. ein besonderer Sensorträger überflüssig wird.

## Ansprüche

1. Verfahren zum Ummanteln länglicher Körper, wie beispielsweise Kabelbäume mit einem aus einer Schweißbahn aus verschweißbarer Kunststoffolie, Polsterfolie mit Luftblaseneinschluß,Schaumstoffolie oder dergleichen gebildeten Mantel, mit mindestens einer längs verlaufenden, sich über die Mantellänge erstreckenden Naht
- bei dem der längliche Körper aus einer Position vor der vorhangähnlich gespannten Schweißbahn quer zur Schweißbahnebene durch diese bewegt wird,
- der längliche Körper bei dieser Bewegung Schweißbahn unter Bildung einer haarnadelähnlichen Umschlingung mitnimmt,
- die Bewegung angehalten wird, nachdem der längliche Körper eine im wesentlichen parallel zur Schweißbahnebene liegende Schweißschienenebene in der zwei einander gegenüber geordnete Schweißschienen vorgesehen sind passiert hat,
- die haarnadelförmige Umschlingung nach dem Anhalten der Bewegung durch Schließen eines Spaltes zwischen den Schweißschienen zu einer Vollumschlingung umgeformt wird und
- bei geschlossenen Schweißschienen ein wärmeerzeugender Stromstoß eingeschaltet wird, in dessen Folge eine Temperaturerhöhung, die zwischen den Schweißschienen befindlichen Schweißfolien verschweißt und die Schweißnaht etwa mittig trennt,
- worauf der nun ummantelte längliche Körper entnommen wird und die Schweißbahn in die Schweißbahnebene zurückkehrt.

2. Verfahren nach Anspruch 1, **dadurch gekennzeichnet**, daß die Schweißbahn von einer Seite her der Ummantelungsstelle zugeführt wird, wobei auf der Gegenseite ein Schweißbahnstück angeordnet ist, das mit der Schweißbahn im Ummantelungsbereich verschweißt ist und mittels einer Spannwalze in Zuführrichtung gespannt gehalten wird.

3. Verfahren nach Anspruch 1, **dadurch gekennzeichnet**, daß die Schweißbahn von beiden Seiten her der Ummantelungsstelle zugeführt wird, wobei die vorherige Schweißnaht von der Vorderseite des länglichen Körpers erfaßt und die Ummantelung vollendende neue Schweißnaht auf der Rückseite des länglichen Körpers gebildet wird.

4. Verfahren nach Anspruch 2 oder 3, **dadurch gekennzeichnet**, daß der längliche Körper vor dem Einführen in den Umschweißungsbereich durch Anlegen in einer Längsrichtung des länglichen Körpers wirkenden Kraft gespannt und ausgerichtet wird.

5. Vorrichtung zum Durchführen des Verfahrens nach einem der Ansprüche 1 bis 4, **gekennzeichnet durch** ein Grundgestell (1,2) mit mindestens einem Lager (3) zur Aufnahme einer Vorratsrolle (11.1; 11.2) der Schweißfolie (11), eine angetriebene Walze (6) sowie eine oder mehrere Umlenkwalzen (6.2), mit denen die Schweißbahn (11) zum Ummantelungsbereich geführt ist, zwei einander gegenüber angeordnete Schweißschienen (51.1, 51.2) von denen mindestens eine gegen die andere bewegbar ist, einen vorzugsweise als Hydraulikzylinder (63) ausgebildeten Antrieb für die Schweißschienen (51.1; 51.2) sowie Mitteln (20;30) zum Erfassen und Bewegen der länglichen Körper (9) durch die Ebene der Schweißbahn (11) und die Ebene der Schweißschienen (51.1, 51.2), wobei die einander zugewandten Seiten der Schweißschiene (51.1, 51.2) mit je einem Heizband (25) versehen sind, das durch einen von einem Steuer gerät geschlateten Stromimpuls über die Schmelztemperatur des Schweißbahnmaterials erhitzbar ist.

6. Vorrichtung nach Anspruch 5, **dadurch gekennzeichnet**, daß eine Vorratsrolle (11.1) für die Schweißbahn (11) vorgesehen ist und daß diese Schweißbahn (11) über den Ummantelungsbereich hinaus mit einem gleichgerichteten Stück dieser Schweißbahn (11) über eine Schweißnaht (11.3) verbunden ist und dieses Stück Schweißbahn ab einer Spannwalze (8) befestigt und über die Spannwalze (8) nachspannbar ist.

7. Vorrichtung nach Anspruch 6, **dadurch gekennzeichnet**, daß die Spannwalze (8) mit einem Klinken-Zahnradtrieb zum Nachspannen versehen ist.

8. Vorrichtung nach Anspruch 5, **dadurch gekennzeichnet**, daß zwei Vorratsrollen (11.1, 11.2) für die Schweißbahn (11) vorgesehen sind und daß beide Schweißbahnen (11) über jeweils eine Antriebswalze (6) und entsprechende Umlenkwalzen (6.2) gegeneinander gerichtet zum Ummantelungsbereich geführt und dort mittels einer Schweißnaht (11.3) miteinander verbunden sind.

9. Vorrichtung nach einem der Ansprüche 5 bis 8, **dadurch gekennzeichnet,** daß die Mittel zum Erfassen und Bewegen der länglichen Körper (9) vone einer Schwenkhebeleinrichtung (20) gebildet sind, bei der zwei im Abstand voneinander angeordnete Schwenkhebel (21) um eine gemeinsame, im wesentlichen parallel zu den Schweißschienen (51) ausgerichtete Schwenkachse (21.1) schwenkbar angeordnet sind und die Schwenkhebel (21) an ihren freien Enden Klemmgabeln (22) aufweisen, die von einem vorzugsweise als Hydraulikzylinder (23) ausgebildeten Antrieb zum Klemmen der länglichen Körper (9) betätigbar sind, wobei die beiden Schwenkhebel (21) über ein Quergestänge (24) miteinander verbunden sind.

10. Vorrichtung nach Anspruch 9, **dadurch gekennzeichnet,** daß am freien Ende eines jeden Schwenkhebels (21) ein Bedienungshandgriff (21.2) vorgesehen ist, wobei vorzugsweise Verriegelungsmittel derart vorgesehen sind, daß das Verschwenken nur möglich ist, wenn beide Handgriffe gefaßt sind.

11. Vorrichtung nach Anspruch 9, **dadurch gekennzeichnet,** daß mindestens eine Antriebseinheit (27) mit dem Quergestänge (24) in Wirkverbindung steht.

12. Vorrichtung nach Anspruch 9, **dadurch gekennzeichnet,** daß die Schwenkhebel (21) vorzugsweise formschlüssig mit der Schwenkachse (21.1) verbunden sind, mit der die Antriebseinheit in Wirkverbindung steht.

13. Vorrichtung nach einem der Ansprüche 9 bis 12, **dadurch gekennzeichnet,** daß eine der Klemmgabeln (20) mit einer Strammereinrichtung (40) versehen ist, wobei das mit der Klemmgabel (22) versehene Ende des Schwenkhebels (21) quer zu seiner Schwenkebene verschwenkbar ist.

14. Vorrichtung nach Anspruch 9 bis 13, **dadurch gekennzeichnet,** daß mindestens ein Schwenkhebel (21) auf der Schwenkachse (21.1) und dem Antriebsgestänge (24) mit je einem festlegbaren Schiebelager (25,26) gelagert ist.

15. Vorrichtung nach einem der Ansprüche 5 bis 8, **dadurch gekennzeichnet,** daß die Mittel zum Erfassen und Bewegen der länglichen Körper von einem Umlaufförderer (30) gebildet sind, bei dem zwei im Abstand voneinander laufende Endlosketten (31) jeweils um ein vorderes und ein hinteres Umlenkrad (32) geführt sind und jede der Endlosketten (31) äquidistant angeordnete Klemmgabeln (33) aufweist, mit einem festen und einem beweglichen Teil (31.1) zwischen denen eine Zugfeder angeordnet ist, wobei die beweglichen Teile (31.1) der Klemmgabeln (33) mit äußeren Lösemitteln (34.1; 34.2; 36) zusammenwirken.

16. Vorrichtung nach Anspruch 15, **dadurch gekennzeichnet,** daß die vorderen der Umlaufräder (32) mit einer Öffnerbahn (34.1) versehen sind, die mit den bewegten Teilen (33.1) der Klemmgabeln (33) diese zum Einlegen der länglichen Körper (9) öffnend zusammenwirken.

17. Vorrichtung nach Anspruch 16, **dadurch gekennzeichnet,** daß im Bereich der hinteren der Umlenkräder (32) ein gestellfester Öffnernocken (34.2) vorgesehen ist, der mit den beweglichen Teilen (33.1) der Klemmgabeln (33), diese zum Abwerfen der ummantelten länglichen Körper (9.1) öffnen, zusammenwirken.

18. Vorrichtung nach einem der Ansprüche 15 bis 17, **dadurch gekennzeichnet,** daß auf einer Seite des Umlaufförderers (30) in einer Position vor der Ebene der Schweißbahn (11) eine Strammereinrichtung (40) vorgesehen ist, bei der ein Strammergreifer (42) mit zwei in Laufrichtung des Umlaufförderers (30) um 90° schwenkbaren Strammerarmen (42.1) neben der Bahn der Klemmgabeln (33) angeordnet ist, wobei ein Öffnerzylinder (35) mit der jeweils mit dem Strammergreifer (41) fluchtenden Klemmgabel (33) öffnend und ein Strammerzylinder (43) über einen Hebeltrieb (41) mit dem Strammergreifer (41) diesen in Längsrichtung des länglichen Körpers (9) nach außen ziehend zusammenwirken.

19. Vorrichtung nach Anspruch 18, **dadurch gekennzeichnet,** daß die Strammerarme (42.1) über ein Hebelgetriebe, vorzugsweise ein Kniehebelgetriebe miteinander und mit einem hydraulischen oder pneumatischen Antriebszylinder verbunden sind.

20. Vorrichtung nach Anspruch 18, **dadurch gekennzeichnet,** daß für jeden Strammerarme (42.1) ein eigener hydraulischer oder pneumatischer Antriebszylinder vorgesehen ist.

21. Vorrichtung nach Anspruch 19 oder 20, **dadurch gekennzeichnet,** daß der Strammerzylinder (43) erst dann aktivierbar ist, wenn die Strammerarme (42.1) in Klemmstellung gegangen sind.

22. Vorrichtung nach einem der Ansprüche 18 bis 21, **dadurch gekennzeichnet,** daß die Klemmseiten der Klemmarme (42.1) mit einem Klemmbelag, vorzugsweise prisma- oder schalenförmig angeformt, versehen sind.

23. Vorrichtung nach einem der Ansprüche 15 bis 22, **dadurch gekennzeichnet,** daß mindestens eine der Umlaufketten (31) quer zur Förderrichtung verlagerbar ist, wobei das vordere und das hintere Umlenkrad (32) auf einer am Grundgestell der Vorrichtung abgestützten, im wesentlichen parallel zu den Schweißschienen (51) über die Breite der Vorrichtung geführte Wellen (32.1) längs dieser Wellen (32.1) verschieblich gelagert sind und wobei die Umlenkräder (32) mittels Feststellringe (32.3) o.dgl. festlegbar sind.

24. Vorrichtung nach einem der Ansprüche 5 bis 23, **dadurch gekennzeichnet,** daß die Schweißschiene (51) mit höchstens über ihre gesamte Länge reichende, vorzugsweise beidseits angeordnete Niederhalter (54) versehen sind, die am Grundkörper (52) der Schweißschiene (51) parallel zu diesem bewegbar angeordnet sind.

25. Vorrichtung nach Anspruch 24, **dadurch gekennzeichnet,** daß die Niederhalter (54) mit gegen den Grundkörper (52, 52.2) abgestützter Druckfeder (53.2) versehen und mit den hubbegrenzenden, in den Grundkörper (52) geschraubten Kragenschrauben (55.1) am Grundkörper befestigt sind.

26. Vorrichtung nach einem der Ansprüche 5 bis 25, **dadurch gekennzeichnet,** daß die Frontseite des Grundkörpers (52) jeder der Schweißschienen (51) mit einem Heizband (56) versehen ist, das auf einer elektrisch und thermisch isolierenden Unterlage (58) angeordnet mit einem Stromimpulsgeber verbunden ist und von denen eines eine längs verlaufende vorgewellte Sicke (56.1) aufeist.

27. Vorrichtung nach einem der Ansprüche 5 bis 22, **dadurch gekennzeichnet,** daß eine vorzugsweise die obere Schweißschiene (51.1) an einem bewegbaren Schweißschienenträger (62) angeordnet ist, der parallel geführt, vorzugsweise mit mindestens zwei Führungsstangen (64) auf gehängt ist und mittels eines doppelt wirkenden Hydraulikzylinders (63) absenkbar und anhebbar ist.

28. Vorrichtung nach einem der Ansprüche 5 bis 27 **dadurch gekennzeichnet,** daß die Schweißschienen (51) an je einem um je eine Schwenkwelle (68) schwenkbaren Schweißschienenträger (67) angeordnet sind, wobei beide schwenkbaren Schweißschienenträger (67) miteinander kämmende Zahnsegmente (67.1) aufweisen und einer der schwenkbaren Schweißschienenträger (67) mit einem doppelt wirkenden Hydraulikzylinder (63) zusammenwirkt.

29. Vorrichtung nach einem der Ansprüche 5 bis 28 , **dadurch gekennzeichnet,** daß die Schweißschienen mit einem die Heizbänder überdeckenden Trennbelag versehen sind.

30. Vorrichtung nach Anspruch 29, **dadurch gekennzeichnet,** daß als Trennbelag eine Auflage vorzugsweise aus PTFE vorgesehen ist.

31. Vorrichtung nach Anspruch 30, **dadurch gekennzeichnet,** daß als Trennbelag eine erneuerbare Trennfolie (15) vorgesehen ist.

32. Vorrichtung nach Anspruch 31, **dadurch gekennzeichnet,** daß im Bereich des Schweißschienenträgers (61; 62; 67) eine Trennfolien-Vorratsrolle (15.1; 15.2), eine Trennfolien-Aufwickelrolle (17) sowie ein mit der Aufwickelrolle (17) zusammenwirkender Vorschubantrieb (16) angeordnet ist, der bei bewegtem Schweißschienenhalter mit bewegt ist.

33. Vorrichtung nach Anspruch 32, **dadurch gekennzeichnet,** daß der Vorschubantrieb (16) als Hydraulikzylinder mit Klinkenstange ausgebildet ist, der mit einem mit der Aufwickelrolle (17) verbundenen Klinkenrad in Eingriff steht, wobei Klinkenstange und Klinkenrad in einer Bewegungsrichtung des Hubes einen Freilauf bilden.

34. Vorrichtung nach einem der Ansprüche 5 bis 33, **dadurch gekennzeichnet,** daß ein Fühlerstössel (16) am bewegbaren Schweißschienenträger (62;67) vorgesehen ist, der mit Schaltkörpern (65.1) Nocken o.dgl. versehen hubbegrenzend mit Grenzschaltern (66.1, 66.2) zusammenwirkt.

35. Vorrichtung nach einem der Ansprüche 5 bis 34, **dadurch gekennzeichnet,** daß in Höhe der geöffneten Schweißschienen (51.1, 51 .2) zwischen diesen und der Schweißbahn (11) Einlaufwalzen (18) angeordnet sind, deren freier Abstand voneinander mindestens dem Durchmesser des zu umhüllenden länglichen Körpers (9) zuzüglich der zweifachen Stärke der Schweißbahn (11) ist.

36. Vorrichtung nach Anspruch 35, **dadurch gekennzeichnet,** daß jede der Einlaufwalzen (18) mit einer vorzugsweise pendelnd aufgehängten Andrückwalze (19.2) zusammenwirkt.

37. Vorrichtung nach Anspruch 35 oder 36, **dadurch gekennzeichnet,** daß die beiden Einlaufwalzen (18) über eine umlaufende Kette (19) o.dgl. synchronisierend miteinander verbunden sind, wobei eine Umlenkrolle (19.1) in den Lauf der Kette (19) o.dgl. eingeschaltet ist.

38. Vorrichtung nach einem der Ansprüche 5 bis 37, **dadurch gekennzeichnet,** daß mindestens eine der Ausgleichsschlaufen (12) im Verlauf der Schweißbahn (11) mit zwei Geber/Empfänger-Paaren (13.1), die mit dem Antrieb (6.1) der Antriebswalze (6) zusammenwirken, versehen sind.

39. Vorrichtung nach Anspruch 38, **dadurch gekennzeichnet,** daß ein weiteres Geber/Empfänger-Paar (13.2) oberhalb der oberen der beiden Geber/Empfänger-Paare (13.1) vorgesehen ist, dessen Schaltausgang mit einem "Not-Aus"-Schalter verbunden ist.

Fig.1

Fig.2

Fig.3

Fig.5

Fig.4

Fig.7

Fig.6

Fig.9

Fig.8

Fig.10

Fig.11

Fig.12a

Fig.12 b

Fig.12c

Fig.12d